# EUROPÄISCHE PATENTSCHRIFT

(11) **EP 0 997 206 B1**
(45) Veröffentlichungstag und Bekanntmachung des Hinweises auf die Patenterteilung: **23.07.2003**
(21) Anmeldenummer: 98119990.4
(22) Anmeldetag: 22.10.1998
(51) Int. Cl.: B21D 19/08, B21D 28/24, B21D 22/04

(54) **Verfahren zum Herstellen einer Nabe oder eines Schaftes**
Method of making a hub or a shaft
Procédé de fabrication d'un moyeu ou d'une tige

(43) Veröffentlichungstag der Anmeldung: 03.05.2000
(73) Patentinhaber: Electrolux AG, 8021 Zürich (CH)
(72) Erfinder: Schröder, Walter, 8820 Wädenswil (CH)
(74) Vertreter: Schröer, Gernot, Dipl.-Phys.

(56) Entgegenhaltungen:
- EP-A- 0 631 062
- WO-A-92/12355
- DE-A- 4 209 153
- DE-A- 4 231 360
- DE-A- 19 633 541
- US-A- 5 606 888

## Beschreibung

Die Erfindung betrifft ein Verfahren zum Herstellen einer Nabe und ein Verfahren zum Herstellen eines Schaftes.

Aus *DE 42 09 153 C2* ist eine Welle-Nabe-Verbindung bekannt, bei der auf der Umfangsfläche der Welle eine Mehrzahl keilförmiger Erhebungen und auf der Innenfläche der Nabe die gleiche Anzahl entsprechender keilförmiger Ausnehmungen angeordnet sind und die Steigung der Keilflächen im wesentlichen den Verlauf einer logarithmischen Spirale folgt und so flach ist, daß in Abhängigkeit von Material und Beschaffenheit der Oberflächen der Keilflächen sichere Selbsthemmung gegeben ist. Durch eine Drehbewegung der Nabe relativ zur Welle tritt nämlich zwischen den korrespondierenden Keilflächen von Welle und Nabe zunächst eine flächige Berührung, dann ein Reibschluß und bei noch weiterer Drehung schließlich eine rasch zunehmende, überall gleich hohe Flächenpressung (Kraftschluß) zwischen den Keilflächen ein. Die Drehbewegung wird fortgesetzt, bis entweder das vorgesehene, zu übertragende Moment oder die vorgesehene Winkelstellung zwischen Welle und Nabe erreicht ist. Zum Herstel-. len der Teilflächen von Welle und Nabe sind in der *DE 42 09 153 C2* ein Verfahren zur Abtragung von Material wie Fräsen oder Hobeln sowie ein Strangpreß- oder Strangziehverfahren angegeben. Als Anwendungen sind die Verbindung von Nocken auf einer Nockenwelle oder von Zahnrädern auf einer Getriebewelle eines Kraftfahrzeugs, die Verbindung von Streckwerkswalzenabschnitten, beispielsweise bei Spinnereimaschinen, ein Wirkmaschinen-Gelenkgetriebe und die Verbindung von Rohren in Rohrkonstruktionen wie Geländern an Treppen oder Maschinen, Spulengatter für Textilmaschinen oder Leitern angegeben.

Aus der *DE 196 33 541 A1* ist eine Weiterbildung der aus der *DE 42 09 153 C2* bekannten Welle-Nabe-Verbindung bekannt, bei der auf der Außenumfangsfläche der Welle und/Oder Innenumfangsfläche der Nabe in. axialer Richtung der Welle bzw. Nabe zusätzlich zu den Keilflächen zumindest eine Erhebung und/oder eine Vertiefung zur axialen Sicherung der Verbindung angeordnet sind. Insbesondere können diese Erhebungen und Vertiefungen derart angeordnet sein, daß eine Art Gewinde entsteht, so daß in einer Ausführung als Bolzen für die Welle und einer Mutter für die Nabe ein Ersatz für eine Schraubverbindung angegeben wird, bei der zusätzlich zu der Axialsicherung eine axiale Vorspannkraft ähnlich einer üblichen Gewindeschraube erzeugt wird.

Der Erfindung liegt nun die Aufgabe zugrunde, ein einfaches und kostengünstiges Verfahren zum Herstellen einer Nabe oder eines Schaftes, die bzw. der in einer Schaft-Nabe-Verbindung verwendet werden kann, anzugeben.

Diese Aufgabe wird gemäß der Erfindung gelöst mit den Merkmalen eines der Ansprüche 1 bis 3.

Bei den Verfahren gemäß einem der Ansprüche 1 bis 3 zum Herstellen einer Nabe zur Aufnahme eines Schaftes oder zum Herstellen eines Schaftes zum Einfügen in eine Nabe werden jeweils
a) in einem ersten Verfahrensschritt ein Blech (Nabenblech bzw. Schaftblech) mit wenigstens einem Loch bereitgestellt und
b) in einem zweiten Verfahrensschritt das Blech im Bereich um das Loch zu einem Kragen verformt.
   Beim Verfahren gemäß Anspruch 1 wird nun
c) in einem dritten Verfahrensschritt durch den Blechkragen ein Schneidewerkzeug mit einer vorgegebenen Anzahl von jeweils radial, d.h. im Abstand zu einer Mittelachse des Schneidewerkzeugs, in Umfangsrichtung zunehmenden oder abnehmenden Schneidkanten mit einem zum Herstellen der Nabe größeren und zum Herstellen des Schaftes kleineren inneren Abstand zueinander als der Innendurchmesser (bei Nabe) bzw. Außendurchmesser (bei Schaft) des Kragen im wesentlichen parallel zu seiner Mittelachse geführt und dadurch, insbesondere spanend, Material von der Krageninnenwandung (bei Nabe) bzw. Kragenaußenwandung (bei Schaft) abgetragen.

Im Unterschied dazu wird bei den Verfahren gemäß Anspruch 2 und Anspruch 3 die gewünschte Form der Naben- bzw. Schaftoberfläche nicht durch Materialabtrag, sondern durch weitere Verformung (Prägung, Pressung) des Blechs am Kragen erreicht. Gemäß Anspruch 2 und Anspruch 3 wird nämlich
c) in einem dritten Verfahrensschritt aus dem Blechkragen die Nabe bzw. der Schaft erzeugt, indem ein Prägewerkzeug (Verformungswerkzeug, Ziehwerkzeug, Tiefziehwerkzeug) mit. einer Außenwandung (Anspruch 2) bzw. Innenwandung (Anspruch 3) mit einer vorgegebenen Anzahl von jeweils im Abstand zu einer Mittelachse des Prägewerkzeugs in Umfangsrichtung zunehmenden oder abnehmenden Außenwandungsteilbereichen (Anspruch 2) bzw. Innenwandungsteilbereichen (Anspruch 3) und mit einem im Bereich der genannten Außenwandungsteilbereiche bzw. Innenwandungsteilbereiche größeren (Anspruch 2) bzw. kleineren (Anspruch 3) Querschnitt als der Kragen im wesentlichen parallel zur Mittelachse in den Kragen des Nabenblechs eingeführt wird.

Der dadurch vom Prägewerkzeug ausgeübte Druck auf den Blechkragen hat zur Folge, daß sich die Außenwandungsteilbereiche bzw. Innenwandungsteilbereiche des Prägewerkzeuges in dem Kragen in entsprechend verformten (geprägten) Innenwandungsteilbereichen (Anspruch 2) bzw. Außenwandungsteilbereichen (Anspruch 3) abbilden.

In allen drei Verfahren gemäß Anspruch 1 bis 3 wird
d) der im dritten Verfahrensschritt bearbeitete Kragen des Blechs als Nabe bzw. Schaft verwendet.

Die beiden Alternativen der Verfahren gemäß Anspruch 1 bis 3, nämlich Herstellen der Nabe und Herstellen des Schaftes, könnten jeweils unter einem entsprechenden Verfahren zum Herstellen eines Verbindungsteils mit den radial ansteigenden Wandungsbereichen zusammengefaßt werden, wobei die Wandungsbereiche so erzeugt werden, daß sie bei einer vorgegebenen Drehbewegung der beiden zusammengefügten Verbindungsteile gegeneinander mit komplementären Wandungsbereichen eines zum herzustellenden Verbindungsteil korrespondierenden zweiten Verbindungsteil in Reibschluß und/oder Kraftschluß gebracht werden können. Bei der vorliegenden Anmeldung wurde nicht diese abstraktere Formulierung der Ansprüche gewählt, sondern die in der Darstellung wohl einfacher verständliche getrennte Betrachtung von Nabe und Schaft.

Die Erfindung beruht bei allen angegebenen Lösungen auf der Überlegung, daß die Schaft-Nabe-Verbindung nach Art der aus der eingangs genannten Druckschrift *DE 42 09 153 C2* bekannten Ausführungsform auch für Verbindungen geeignet ist, die nur einer vergleichsweise geringen Kraftbeanspruchung ausgesetzt sind, und daß bei solchen Verbindungen die Nabe und/oder der Schaft auch material- und kostensparend aus einem Blech gebildet (in einem Blech integriert) werden können. Die Erfindung beruht ferner auf der weiteren Überlegung, daß eine geeignete Nabe bzw. ein geeigneter Schaft durch einen Tiefziehprozeß (Biegeprozeß, Durchstellprozeß) mit gleichzeitiger oder anschließender entsprechender Ausformung der Nabenwand bzw. Schaftwand aus dem Blech erzeugt werden kann, wobei die erreichbare Tiefe der Nabe bzw. die Länge des Schaftes vom Tiefziehwerkzeug, der Zahl der Biegevorgänge und der Biegsamkeit des Blechs abhängt. Damit werden das für die Blechbearbeitung hervorragend geeignete und kostengünstige Verfahren des Tiefziehens und dessen fertigungstechnische Vorteile zur Herstellung der genannten Nabe bzw. des genannten Schaftes nutzbar gemacht. Durch die Ausbildbarkeit der Nabe oder des Schaftes oder beider ausschließlich in Blech (als Monomaterial) ist die Schaft-Nabe-Verbindung auch leicht recyclebar.

Ein Materialabtragungsverfahren zum Erzeugen der durch die charakteristischen Innenwandungsteilbereiche bzw. Außenwandungsteilbereiche gekennzeichneten Struktur der Nabeninnenwandung bzw. Schaftaußenwandung ist gegenüber einem Prägeverfahren umso mehr vorzuziehen, je kleiner der Durchmesser (lichte Weite) des Kragens bzw. der kragenförmigen Nabe bzw. des kragenförmigen Schaftes ist, da die zum Prägen aufzubringenden Kräfte bei kleiner werdendem Durchmesser größer werden.

Bei gleichem Steigungsverlauf der Wandungsteilbereiche ist der (absolute) Unterschied zwischen deren größtem und kleinstem Abstand von der Nabenachse bzw. Schaftachse umso kleiner, je kleiner der Durchmesser der Nabe bzw. des Schaftes ist. Dadurch muß bei kleinerem Durchmesser der Nabe bzw. des Scahfets im allgemeinen das Material nur in einer geringeren Tiefe abgetragen werden, so daß. das Materialabtragungsverfahren und das Prägeverfahren für unterschiedliche Nabengrößen bzw. Schaftdicken bei gleicher Blechdicke (Stärke der Nabenwandung bzw. Schaftwandung) in optimaler Ergänzung eingesetzt werden können.

Vorteilhafte Weiterbildungen und Ausgestaltungen des Verfahrens gemäß der Erfindung ergeben sich aus den vom Anspruch 1 oder Anspruch 2 oder Anspruch 3 jeweils abhängigen Ansprüchen.

Demnach wird in einer ersten Ausführungsform ein Blech verwendet, das zumindest in einem Verbindungsbereich, in dem die Nabe oder der Schaft erzeugt werden soll, eine Dicke von höchstens 5 mm, vorzugsweise höchstens 1 mm, aufweist. Bleche solcher Dicken sind mit den üblichen Werkstoffen und Werkzeugen problemlos zu biegen und weisen eine ausreichende Stärke auf, um auch mit ohne besonderen Aufwand hergestellten Werkzeugen bearbeitet, insbesondere geprägt oder teilweise abgetragen, werden zu können.

Eine mit einem Verfahren gemäß der Erfindung hergestellte Nabe und/oder ein derart hergestellter Schaft werden bzw. wird im allgemeinen zum Verbinden eines ersten Körpers mit einem zweiten Körper mit einer entsprechenden Schaft-Nabe-Verbindung eingesetzt.

Besonders vorteilhaft ist ein Verfahren gemäß der Erfindung bei Verwendung eines Metallbleches, insbesondere eines Stahlbleches oder eines Aluminiumbleches, als Nabenblech, insbesondere in Kombination mit einem Schaft aus einem Kunststoff.

In einer Ausgestaltung des Verfahrens werden die Innenwandungsteilbereiche der Nabe oder die Außenwandungsteilbereiche des Schaftes oder die Schneidkanten des Schneidwerkzeugs oder die Außenwandungsteilbereiche oder Innenwandungsteilbereiche des Prägewerkzeugs mit einer in Umfangsrichtung im wesentlichen konstanten radialen Steigung erzeugt. Bei entsprechend geformten Außenwandungsteilbereichen des korrespondierenden Schaftes bzw. Innenwandungsteilbereichen der korrespondierenden Nabe erreicht man so eine homogene Kraftverteilung über die gesamte Verbindungsfläche.

Die Nabe oder der Schaft wird in einer vorteilhaften Ausführungsform bezüglich der Nabenachse bzw. Schaftachse mit einer Rotationssymmetrie einer vorgegebenen Zähligkeit erzeugt,. insbesondere indem die Schneidkanten des Schneidwerkzeugs oder die Außenwandungsteilbereiche oder Innenwandungsteilbereiche des Prägewerkzeugs eine entsprechende Symmetrie aufweisen. Der symmetrische Schaft wird in dieser Ausführungsform bei der Drehung automatisch in der symmetrischen Nabe zentriert (selbstzentrierte Verbindung) mit einer hohen Präzision.

Um ein definiertes Drehmoment bzw. einen definierten Drehwinkel bei der Schaft-Nabe-Verbindung zu erreichen und insbesondere den im allgemeinen vergleichsweise dünnen Blechkörper vor einem Überdrehen des Schaftes und den dadurch wirkenden Scher- und Torsionskräften zu schützen, werden in einer besonders vorteilhaften Ausführungsform Anschlagsmittel zur Begrenzung des Drehmoments bzw. Drehwinkels vorgesehen, die mit wenigstens einem Anschlagskörper und einer korrespondierenden Gegenfläche gebildet sind.

Zur weiteren Erläuterung der Erfindung wird auf die Zeichnungen Bezug genommen, in denen Ausführungsbeispiele gemäß der Erfindung jeweils schematisch dargestellt sind. Es zeigen:
- FIG 1: ein Nabenblech und ein Verformungswerkzeug in einem seitlichen Schnitt,
- FIG 2: das Verformungswerkzeug gemäß FIG 1 in einem Querschnitt,
- FIG 3: eine tiefgezogene Nabe in einem Nabenkörper in einem seitlichen Schnitt,
- FIG 4: die Nabe gemäß FIG 3 in einer Draufsicht von unten,
- FIG 5: eine Nabe mit einem eingefügten Schaft in einer Ansicht,
- FIG 6: die Nabe und den Schaft gemäß FIG 5 nach Verdrehen des Schaftes relativ zur Nabe um einen vorgegebenen Drehwinkel in einem Querschnitt,
- FIG 7: einen ersten Körper mit einem Schaft und einem Anschlagskörper in einer Vorderansicht,
- FIG 8: den ersten Körper gemäß FIG 7 nach Einführen und Verdrehen des Schaftes in die Nabe eines zweiten Körpers in einer Vorderansicht und
- FIG 9: die beiden miteinander verbundenen Körper gemäß FIG 8 in einer teilweise geschnittenen Seitenansicht und
- FIG 10: eine Schaft-Nabe-Verbindung, bei der Schaft und Nabe gemäß der Erfindung hergestellt sind.

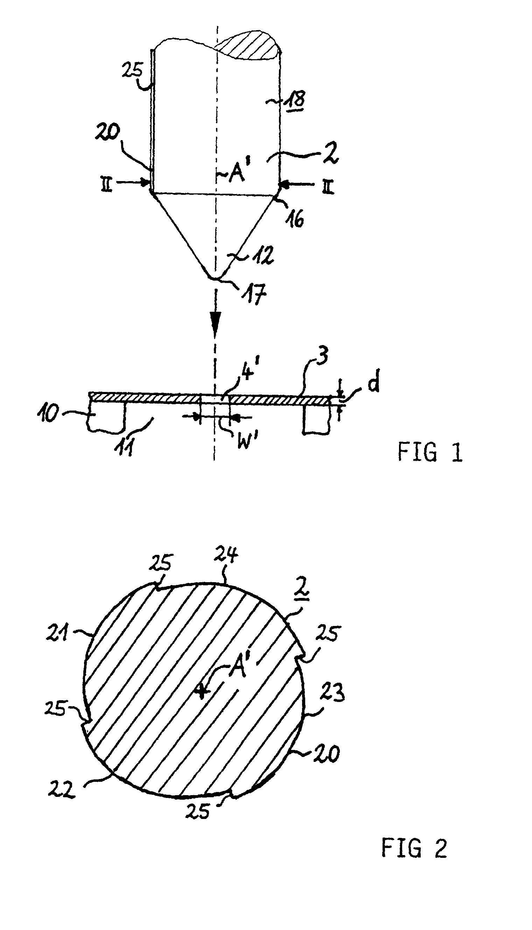

Das Werkzeug gemäß den FIG 1 und 2 weist einen Verformungsstempel 18 und als Gegenstück eine Halterung 10 mit einer Ausnehmung 11 auf. Auf der Halterung (Tragekörper, Auflage, Matrix) 10 liegt ein zu bearbeitendes, plattenförmiges Nabenblech (Nabenkörper) 3 auf. Das Nabenblech 3 weist ein, insbesondere durch Schneiden oder Stanzen erzeugtes, Loch (Ausschnitt, Durchbruch) 4' auf, das vorzugsweise kreisrund ist. Der Durchmesser (lichte Weite) des Loches 4' ist mit W' bezeichnet. Das Nabenblech 3 ist um das Loch 4' oberhalb der Ausnehmung 11 in der Halterung 10 freitragend. Die Dikke des Nabenblechs 3 ist mit d bezeichnet und kann zumindest im Bereich um das Loch 4' im wesentlichen konstant sein.

Der Verformungsstempel 18 weist einen vorderen (unteren) Teil auf, der als Biegestempel 12 ausgebildet ist, und einen hinteren Teil, der als Prägestempel 2 ausgebildet ist. Der Biegestempel 12 verjüngt sich zu einem vorderen Ende 17 hin, vorzugsweise in wenigstens annähernd konischer Gestalt, die am vorderen Ende 17 abgerundet ist. Am vorderen Ende 17 ist der Durchmesser des senkrecht zu einer mit A' bezeichneten Mittelachse des Verformungsstempels 18 bestimmten Querschnittes des Biegestempels 12 kleiner als der Durchmesser W' des Loches 4' im Nabenblech 3.

Der Prägestempel 2 weist an seiner Außenwandung (Außenfläche, Mantelfläche) mehrere, beispielsweise wie dargestellt vier, Außenwandungsteilbereiche (Außenwandungsabschnitte) 21 bis 24 und jeweils zwei dieser Außenwandungsteilbereiche 21 bis 24 verbindende Außenwandungsteilbereiche 25 auf. Die Außenwandungsteilbereiche 21 bis 24 nehmen radial, d.h. in ihrem Abstand zur Mittelachse A' des Prägestempels 2 in einer vorgegebenen Umfangsrichtung (in Azimutrichtung, Richtung des Polarwinkels), hier im Uhrzeigersinn, monoton oder sogar streng monoton (kontinuierlich) zu. Gemäß der vergrößerten Darstellung in FIG 2 im Uhrzeigersinn gesehen ist die radiale Steigung (Änderung des Abstands von der Mittelachse A' mit dem Azimutwinkel oder Polarwinkel) der Außenwandungsteilbereiche 21 bis 24 also größer oder gleich bzw. immer größer Null. Insbesondere können die Außenwandungsteilbereiche 21 bis 24 die Gestalt von Spiralenabschnitten, vorzugsweise von logarithmischen Spiralenabschnitten, aufweisen. Bei logarithmischen Spiralenabschnitten ist die radiale Steigung in der Umfangsrichtung konstant. Zwischen den einzelnen Außenwandungsteilbereiche 21 bis 24 liegt jeweils ein Außenwandungsteilbereich 25, der die beiden benachbarten Außenwandungsteilbereiche 21 und 22 bzw. 22 und 23 bzw. 23 und 24 bzw. 24 und 21 miteinander verbindet. Im dargestellten Ausführungsbeispiel gemäß FIG 2 sind die Außenwandungsteilbereiche 25 im wesentlichen geradlinig und radial ausgerichtet. Auf die genaue Form der Außenwandungsteilbereiche 25 kommt es jedoch nicht an. Insbesondere können die Außenwandungsteilbereiche 25 auch einen flacheren Verlauf haben. Jedoch sollten die Außenwandung'steilbereiche 25 in Umfangsrichtung geringer ausgedehnt sein als die Außenwandungsteilbereiche 21 bis 24.

Die Außenwandungsteilbereiche 21 bis 24 können axial, also in Richtung der Mittelachse A' gesehen, unmittelbar am Übergangsbereich 16 zwischen Biegestempel 12 und Prägestempel 2 oder auch in einem Abstand dazu beginnen. Im dargestellten Ausführungsbeispiel gemäß FIG 2 sind die Außenwandungsteilbereiche 21 bis 24 derart rotationssymmetrisch zueinander angeordnet, daß bei einer Drehung des Prägestempels 2 um seine Mittelachse A' um jeweils 90 Grad eine Dekkungsgleichheit (Kongruenz) erreicht wird. Es liegt also - geometrisch ausgedrückt- eine vierzählige Rotationssymmetrie des Prägestempels 2 bezüglich der Mittelachse A' als Symmetrieachse vor.

In Abweichung von FIG 2 können natürlich auch weniger oder mehr Außenwandungsteilbereiche vorgesehen sein, deren radiale Steigung jeweils konstant sein oder auch in Umfangsrichtung zu- oder abnehmen kann. Der Prägestempel 2 weist dann im allgemeinen bezüglich der Mittelachse A' eine der Anzahl der Außenwandungsteilbereiche entsprechende Zähligkeit auf. Der Prägestempel 2 muß aber nicht rotationssymmetrisch sein, sondern es können die Außenwandungsteilbereiche auch asymmetrisch bezüglich der Mittelachse A' angeordnet sein, wobei an den übrigen Außenwandungsbereichen des Prägestempels 2 dann insbesondere eine zylindrische Form gewählt werden kann.

Zum Herstellen einer Nabe wird nun der Verformungsstempel 18 gemäß FIG 1 in einer parallel zur Mittelachse A' liegenden Einführrichtung entlang des dargestellten Pfeiles zu dem Nabenblech 3 geführt und mit dem vorderen Ende 17 des Biegestempels 12 in das Loch 4' des Nabenblechs 3 eingedrückt. Während der Bewegung des Biegestempels 12 wird das Nabenblech 3 um das Loch 4' durch den im Querschnitt kontinuierlich zunehmenden Biegestempel 12 um einen durch die Abmessungen des Biegestempels 8 vorgegebenen Betrag in der Einführrichtung umgebogen (durchgestellt). Im Übergangsbereich 16, der mit einer weichen Kontur gestaltet ist, geht der Biegeprozeß als erste Stufe des Verformungsprozesses durch den Verformungsstempel 2 in einen Prägeprozeß als zweite.Stufe des Verformungsprozesses über. Bei diesem Prägeprozeß wird der vom Biegestempel 2 umgebogene, in FIG 1 und 2 nicht dargestellte kragenförmige Teil des Nabenblechs 3 durch die Außenwandungsteilbereiche 21 bis 24 des nun durch diesen kragenförmigen Teil hindurchgeführten Prägestempels 2 radial von der Mittelachse A' nach außen verformt. Damit dies möglich ist, ist der Querschnitt des Prägestempels 2 im Bereich der Außenwandungsteilbereiche 21 bis 24, insbesondere um die Höhe der Außenwandungsteilbereiche 25, größer gewählt als der maximale Querschnitt des Biegestempels 12 und damit als der Innendurchmesser des erzeugten Blechkragens. Bei diesem Prägeprozeß bildet sich die Gestalt der Außenwandung 20 des Prägestempels 2 auf den Kragen des Nabenblechs 3 ab.

Die Ausnehmung 11 der Halterung 10 ist vorzugsweise der Form, insbesondere der Querschnittskontur, des Verformungsstempels 18 angepaßt, so daß das Nabenblech 3 entlang des Randes der Ausnehmung 11 von der Halterung 10 optimal abgestützt ist und ein sauberer Kragen im wesentlichen ohne eine (sonstige) Verformung des Nabenblechs 3 erreicht wird.

Die Einführrichtung für den Biegestempel 12 ist vorzugsweise so gewählt, daß die Schnittgrate bei einem gestanzten oder geschnittenen Loch 4' an der Außenseite des Kragens zu liegen kommen, insbesondere also gleich zur Stanzrichtung beim Stanzen des Lochs 4'. Es ist dann auch ein Kantenschutz verwirklicht.

Anstelle eines einzigen Verformungsstempels 18 können in Abwandlung zu FIG 1 auch zwei separate Werkzeuge, also ein Biegestempel 12 und ein Prägestempel 2, in aufeinanderfolgenden Verfahrensschritten zur Verformung des Nabenblechs 3, i.e. zur Kragenbildung bzw. Kragenaufweitung, verwendet werden.

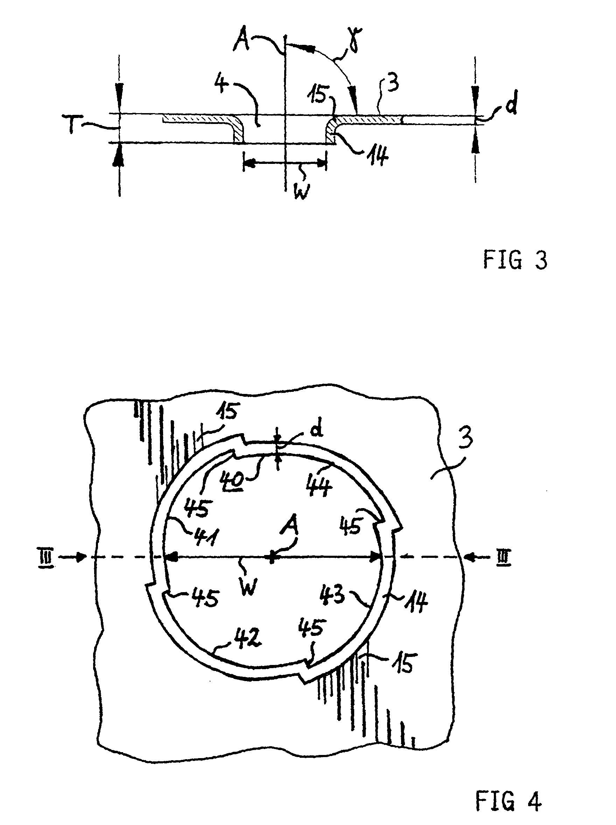

Das Ergebnis eines zweistufigen Verformungsprozesses gemäß den FIG 1 und 2 ist in den FIG 3 und 4, nicht maßstäblich, dargestellt. Die FIG 3 entspricht einem Schnitt durch FIG 4 entlang der durch III-III gekennzeichneten Linie.

In FIG 3 sind der durchgestellte Kragen des Nabenblechs 3 mit 14, die mit dem Kragen 14 und seinem Innenraum gebildete Nabe mit 4 sowie deren Tiefe mit T und Durchmesser (Innendurchmesser des Kragens 14) mit W bezeichnet. Die in FIG 3 gezeigte Nabe 4 ist hergestellt mit einem unter einem Winkel γ von etwa 90° zwischen der Mittelachse A' des Biegestempels 12 gemäß FIG 1 und der Normalen des Nabenblechs 3 eingeführten Biegestempel 12. Die Nabenachse A der Nabe 4 liegt somit ebenfalls etwa senkrecht zum Nabenblech 3 außerhalb der Nabe 4. Die Tiefe T der Nabe 4 hängt von der axialen, entlang der Mittelachse A' des Biegestempels 12 gemäß FIG 1 gemessenen, Abmessung des Biegestempels 12 mit zunehmendem Querschnitt ab. Der Durchmesser W der Nabe 4 ist größer als das ursprüngliche Loch 4' gemäß FIG 1 und abhängig vom maximalen Querschnitt des Biegestempels 12. Der gebogene Zwischenbereich zwischen dem Kragen 14 und dem restlichen Nabenblech 3 ist mit 15 bezeichnet.

In einer nicht dargestellten Ausführungsform kann der Kragen 14 auch unter einem von 90° abweichenden Winkel γ geneigt sein, insbesondere indem die Mittelachse A' des Biegestempel 12 gemäß FIG 1 beim Biegeprozeß um den entsprechenden Winkel γ schräg gerichtet wird. Dadurch kann eine schräge Schaft-Nabe-Verbindung, beispielsweise aus Platzgründen, realisiert werden.

In der FIG 4 ist die geprägte, strukturierte Gestalt des Kragens 14 zu erkennen. Die Gestalt des Prägestempels 2 gemäß FIG 2 hat sich beim Prägen auf die Nabe 4 gemäß FIG 4 übertragen. Als zum Prägestempel 2 komplementäres Gebilde weist die Nabe 4 nun an ihrer Innenwandung 40 vier in Umfangsrichtung radial ansteigende Innenwandungsteilbereiche 41 bis 44 auf, die jeweils über radial verlaufende Innenwandungsteilbereiche 45 miteinander verbunden sind. Die konvexe Gestalt des Prägestempels 2 schlägt sich in einer entsprechend, bezogen auf das Nabenblech 3 konkaven Gestalt der Nabe 4 nieder. Der den Kragen 14 umgebende gekrümmte Zwischenbereich 15 ist durch teilweise Schraffur angedeutet.

Prinzipiell könnte der Prägevorgang auch durch ein von außen auf den Kragen 14 einwirkendes Werkzeug erfolgen, wobei der Prägestempel dann innen hohl sein, eine entsprechend mit radial stiegenden Innenwandungsbereichen versehene Innenwandung aufweisen und einen kleineren Querschnitt (Durchmesser) als der Kragen aufweisen müßte, so daß radial nach innen wirkende Kräfte bei Überstülpen des Prägewerkzeugs über den Kragen 14 erzeugt würden. Auch wären bei einem Prägen des Kragens 14 sowohl von außen als auch von innen auch Prägewerkzeuge denkbar, bei denen eine oder mehrere, entsprechend geformte Formen unter Druck von außen bzw. innen auf den Kragen hin zusammengeführt werden.

Ein nochmaliger Blick auf FIG 4 zeigt auch, daß der geprägte Kragen 14 nicht nur als Nabe 4, sondern komplementär auch als Schaft zum Einfügen in eine entsprechende Nabe verwendet werden kann. Durch den Prägevorgang weist nämlich nicht nur die Innenwandung 40 des in FIG 4 als Nabe 4 vorgesehenen Kragens 14 das typischen Wandungsprofil der gewünschten Schaft-Nabe-Verbindung auf, sondern auch die - nicht näher bezeichnete - Außenwandung des Kragens 14, die im wesentlichen parallel zur Innenwandung 40 um die Dicke d des Blechs (hier dann als Schaftblech statt Nabenblech bezeichenbar) 3 nach außen versetzt ist. Die geprägte Kragen-Struktur gemäß FIG 4 (und entsprechend das Werkzeug gemäß den FIG 1 und 2 zum Herstellen der Kragenstruktur) ist somit ebenso wie als Nabe auch als Schaft verwendbar, wobei eine - nicht dargestellte -Nabe zum Einfügen dieses Schaftes eine im wesentlichen um geringfügig mehr als die Dicke d nach außen gestreckte Innenwandung mit demselben Wandprofil wie die Innenwandung 40 der dargestellten Nabe 4 aufweisen würde.

Statt mithilfe eines Prägevorganges kann die Nabe 4 in einer nicht dargestellten Ausführungsförm auch mithilfe eines Schneidevorgangs oder sonstigen Materialabtragungsprozesses (z.B. Hobeln, Fräsen, Feilen) hergestellt werden. Dazu wird anstelle eines Prägestempels 2 gemäß FIG 1 und 2 ein Schneidestempel verwendet, der anstelle der Außenwandungsteilbereiche 21 bis 24 in der Querschnittsprojektion gleich geformte, jedoch mit scharfer, geschliffener Kontur versehene Schneidkanten aufweist. Mit dem Schneidestempel wird dann die Blechwand des Kragens 14 nicht nach außen gedrückt (geprägt), sondern es wird an ihrer Innenseite Material gemäß dem gewünschten Profil (Struktur) spanend abgetragen.

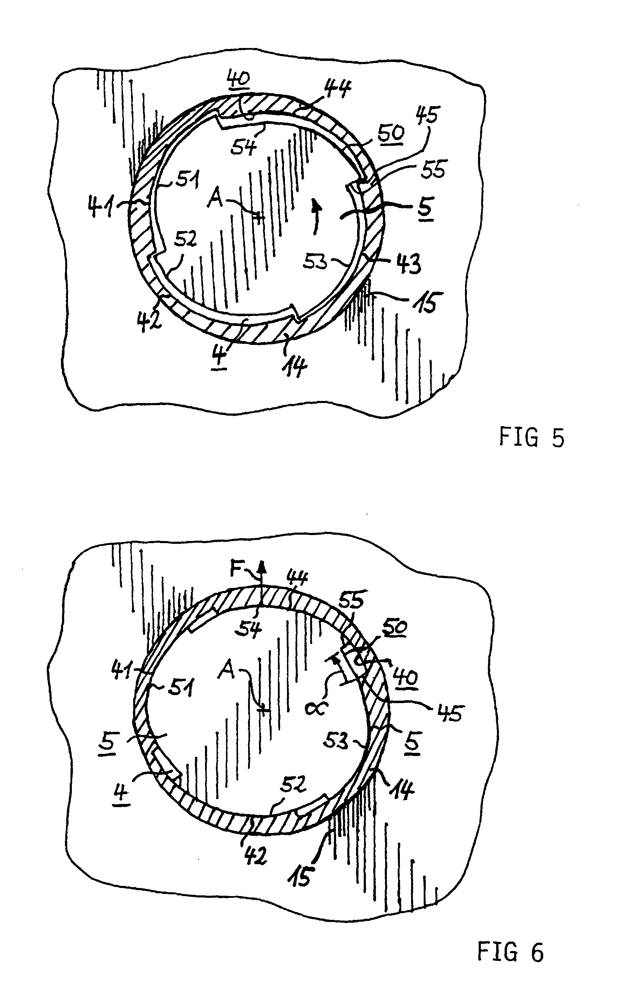

Die FIG 5 und 6 zeigen nun die Verwendung einer Nabe 4, die mit einem solchen Materialabtragungsprozeß in Abwandlung zu den FIG 3 und 4 geformt wurde, in einer Schaft-Nabe-Verbindung. Der an seiner Innenwand mit den als Ausnehmungen geformten Innenwandungsteilbereichen 41 bis 45 der Nabe 4 versehene Kragen 14 ist zur Verdeutlicheung schraffiert. Es ist zur Herstellung der Schaft-Nabe-Verbindung ein Schaft (Bolzen, Welle) 5 in die Nabe 4 eingefügt. Der Schaft 5 ist im Querschnitt ähnlich wie der Prägestempel 2 gemäß FIG 2 ausgebildet und weist somit vier Außenwandungsteilbereiche 51 bis 54 seiner Außenwandung 50 auf, die jeweils wieder durch dazwischenliegende, beispielsweise radial verlaufende, Außenwandungsteilbereiche 55 miteinander verbunden sind und radial in Umfangsrichtung im Uhrzeigersinn zunehmen.

FIG 5 zeigt einen Zustand, in dem der Schaft 5 lose im wesentlichen axial, d.h. parallel zur Nabenachse A, in die Nabe 4 eingeführt ist. Die Außenwandungsteilbereiche 55 des Schaftes 5 liegen in diesem losen Zustand gemäß FIG 5 an den Innenwandungsteilbereichen 45 der Nabe 4 an, können aber auch von diesen beabstandet sein. Zwischen den Außenwandungsteilbereichen 51 bis 54 des Schaftes 5 und den unmittelbar gegenüberliegenden Innenwandungsbereichen 41 bis 44 der Nabe 4 sind jeweils Spalte gebildet.

Bei Verdrehen des Schaftes 5 in der dargestellten Pfeilrichtung, also entgegen dem Uhrzeigersinn, um die gemeinsame Mittelachse A als Drehächse wird nun jeder der Außenwandungsteilbereiche 51 bis 54 des Schaftes 5 zunächst mit dem korrespondierenden Innenwandungsteilbereich 41 bis 44 der Nabe 4 in Flächenkontakt gebracht. Bei nur geringer Drehung um einen kleinen Drehwinkel α wird lediglich ein Reibschluß zwischen den Innenwandungsteilbereichen 41 und den Außenwandungsteilbereichen 51 bis 54 erzeugt, bei weiterer Drehung, d.h. bei größerem Drehwinkel α oder einem größeren Drehmoment, tritt dagegen ein Kraftschluß oder eine Flächenpressung ein (Preßverbindung). Diesen Zustand mit einer Preßverbindung zwischen Schaft 5 und Nabe 4 zeigt FIG 6. Die in normaler Richtung zu den beiden in Kraftschluß tretenden Flächen 54 und 44 wirkende Kraft ist mit F bezeichnet. Diese durch die Drehung des Schafts 5 relativ zur Nabe 4 erzeugte Verbindung basiert auf einer über die gesamte Fläche wirkende Flächenpressung, so daß eine sehr homogene Kräfteverteilung erreicht wird. Der Schaft 5 ist im Ausführungsbeispiel gemäß den FIG 5 und 6 massiv ausgebildet, kann aber auch innen hohl sein, beispielsweise in Form eines Hohlzylinders, Kragens, Ringes oder Rohrstückes.

Auch das anhand der FIG 5 und 6 beschriebene Verfahren mit einem Materialabtragungsprozeß ist mit entsprechenden Modifikationen auch zum Herstellen eines Schaftes für die Schaft-Nabe-Verbindung verwendbar. Dazu wird das Material am Kragen 14 nicht innen, sondern zur Ausbildung der radial in Umfangsrichtung veränderlichen Außenwandbereiche des Schaftes außen abgetragen, beispielsweise durch ein entsprechend geformtes Schneidewerkzeug mit einem kleineren Innendurchmesser der Schneidkanten als der Außendurchmesser des Kragens 14.

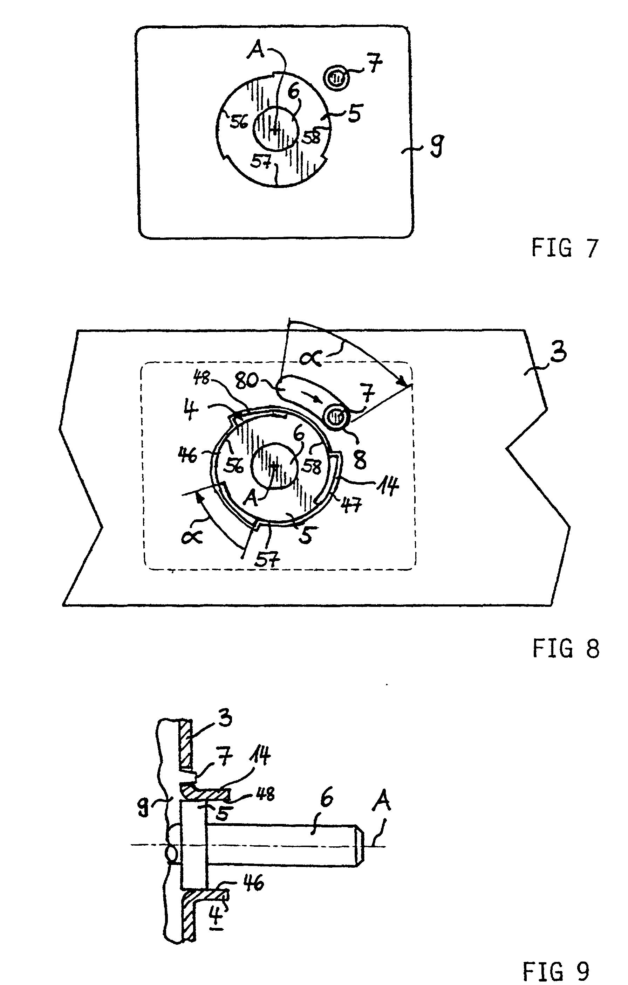

Die FIG 7 bis 9 veranschaulichen nun ein Verfahren zum Verbinden zweier Körper durch eine Schaft-Nabe-Verbin-dung mit gestanzter Nabe. Gemäß Fig 7 wird ein erster Körper 9 bereitgestellt, an oder in dem eine Drehwelle 6 befestigt ist. Die Drehwelle 6 wird umgeben von einem; beispielsweise ringförmigen, Schaft 5, der fest mit dem ersten Körper 9 verbunden ist, insbesondere an diesem befestigt oder angeformt oder mit diesem ausgeformt ist. Die Drehachse der Drehwelle 6, die Mittelachse des Schaftes 5 und die Nabenachse A fallen im dargestellten Ausführungsbeispiel zusammen. Ortsfest zum Schaft 5 weist der erste Körper 9 ferner einen Anschlagskörper 7, der beispielsweise stiftförmig ausgebildet sein kann, auf. Der Schaft 5 weist gemäß FIG 7 drei Außenwandungsteilbereiche 56, 57 und 58 auf, die bezüglich seiner Mittelachse, die mit der Nabenachse A zusammenfällt, mit einer dreizähligen Symmetrie angeordnet sind, d.h. bei Drehung um 120 Grad um die Mittelachse A ist der Schaft 5 in seinem Querschnitt jeweils deckungsgleich (kongruent).

Gemäß FIG 8 ist der erste Körper 9 nun von hinten mit einem Nabenkörper 3 als zweitem Körper verbunden. Zur Verbindung wird der Schaft 5 durch eine entsprechend ausgebildetete Nabe 4 im Nabenkörper 3 mit Innenwandungsteilbereichen 46, 47 und 48 eingefügt und in der vorgegebenen Drehrichtung um den Drehwinkel α gedreht, so daß die korrespondierenden Außenwandungsteilbereiche 56 bis 58 an die entsprechenden Innenwandungsteilbereiche 46 bis 48 der Nabe 4 gepreßt werden und eine kraftschlüssige, selbsthemmende Verbindung zwischen Schaft 5 und Nabe 4 erreicht wird. Der vorgegebene maximale Drehwinkel α oder ein entsprechendes, vorgegebenes maximales Drehmoment werden in der.dargestellten Ausführungsform durch die mit dem Anschlagskörper 7 und eine entsprechende Anschlagsfläche 8 im Nabenkörper 3 gebildeten Anschlagsmittel definiert. Es wird nämlich zugleich mit dem Schaft 5 auch der Anschlagskörper 7 in eine entsprechende Öffnung als Führungsschlitz 80 im Nabenkörper 3 eingeführt. und bei der Drehung des Schafts 5 um den Drehwinkel α bis zur Anschlagsfläche 8 mitgedreht. Ein Überdrehen über diese Endposition wird durch die Anschlagsmittel verhindert.

Die FIG 9 zeigt einen teilweise geschnittene Seitenansicht in einem Schnitt durch die Nabenachse A und den in der Endstellung an der Anschlagsfläche 8 befindlichen Anschlagskörper 7.

Die Anschlagsbegrenzung gemäß den FIG 7 bis 9 ermöglicht eine exakte Definition des maximalen Drehwinkels α bzw. des maximalen Drehmoments für die Drehung zur Verbindung von Nabe 4 und Schaft 5. Diese Anschlagsbegrenzung ist vorteilhaft bei einer Schaft-Nabe-Verbindung mit einem vergleichsweise dünnen Blech als Nabenblech 3 (oder Schaftblech), weil so ein Überdrehen und entsprechendes Verbiegen und Verformen des Nabenblechs 3 verhindert wird. Es versteht sich, daß die Anschlagsbegrenzung auch durch Ausbilden einer Anschlagsfläche am ersten Körper und eines Anschlagkörpers am zweiten Körper erreicht werden kann.

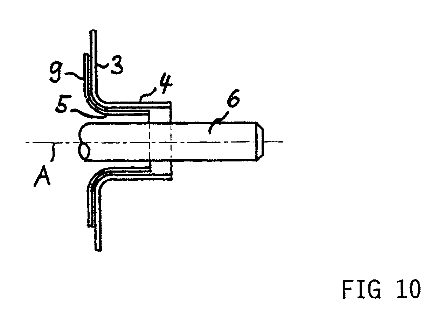

FIG 10 zeigt eine Ausführungsform, bei der sowohl die Nabe 4 als auch der Schaft 5 durch einen Verformungsprozeß aus jeweils einem Blech hergestellt sind. Zum Herstellen des Schaftes 5 können in Abwandlung von FIG 1 und 2 dann entsprechende Werkzeuge vorgesehen werden, bei denen der Prägestempel 2 eine komplementäre Außenwandung 20 zum Erzeugen nur einer Blechaußenkontur des Schaftquerschnittes wie beispielsweise in FIG 5 und 6 aufweist, oder auch ein von außen über den Schaftkragen gestülptes Prägewerkzeug. In dieser Ausführungsform gemäß FIG 10 kann die Schaft-Nabe-Verbindung komplett in Blech ausgeführt werden.

Das Blech 3 kann in allen Ausführungsformen mit einem Metall, insbesondere einem Stahl, Aluminium oder einer Aluminiumlegierung, gebildet sein. Die Dicke d des Nabenblechs 3 beträgt im allgemeinen höchstens 5 mm und vorzugsweise höchstens 1 mm, insbesondere um Material einzusparen. Es hat sich gezeigt, daß selbst bei diesen vergleichsweise geringen Dicken d denhoch eine sichere und haltbare Verbindung zwischen der Nabe 4 und dem Schaft 5 möglich ist.

Die Steigungen (Ableitung des radialen Abstandes nach dem Azimuthwinkel) der radial ansteigenden oder abfallenden Wandbereiche (41 bis 48) der Nabe (4) oder des Schaftes werden im allgemeinen zwischen 0,005 und 0,02.gewählt, sowohl bei Ausführungsformen mit in Umfangsrichtung konstanter Steigung als auch mit in Umfangsrichtung zunehmender oder abnehmender Steigung. Bei typischen Durchmessern der Nabe und des Schaftes zwischen 5 mm und 60 mm kann der maximale Unterschied zwischen den radial am weitesten innen und am weitesten außen liegenden Bereichen der Wandung relativ gering ausfallen, typischerweise zwischen 0,2 mm und 2 mm, die bei der Dicke des Blechs 3 beim Materialabtragungsverfahren zu berücksichtigen sind.

Besonders vorteilhaft ist die Materialkombination eines Blechs, insbesondere eines Metallblechs und vorzugsweise eines Stahlblechs für den Nabenkörper 3 zumindestens in dem Verbidnungsbereich, in dem die Nabe 4 gestanzt wird und einem Kunststoff, insbesondere einem plastisch verformbaren Kunststoff wie beispielsweise einem thermoplastischen oder duroplastischen Polymerkunststoff für den Schaft 5, der dann insbesondere durch ein Gieß- oder Spritzgießverfahren hergestellt werden kann. Bei Verwendung eines plastisch verformbaren Materials tritt bei einem bestimmten Drehmoment eine plastische Verformung des Schaftes und eine dadurch bewirkte zusätzliche Selbsthemmung der Verbindung ein. Es kann allerdings auch ein elastischer Kunststoff für den Schaft verwendet werden, insbesondere wenn eine Geräuschdämmung der Verbindung oder eine zusätzliche Schwingungsentkopplung gewünscht ist., oder auch aus einem elastisch verformbaren Material bestehen.

Die beschriebene gestanzte Nabe und die zugehörige Schaft-Nabe-Verbindung sind in einer Vielzahl von Anwendungsgebieten einsetzbar. Ohne Beschränkung der Allgemeinheit sei hier der Bereich der Haushaltsgeräte genannt, in dem bei den meisten Verbindungen von Bauteilen (Funktionseinheiten) miteinander oder mit Trägern nur relativ geringe Kräfte von der Schaft-Nabe-Verbindung zu tragen sind. Zu denken ist hier beispielsweise an die Befestigung von statischen wie drehenden Teilen an entsprechenden Trägern, insbesondere Elektromotoren, Strömungsmaschinen (Pumpen, Gebläsen) oder Kompressoren an einem Gehäuse, Drehknebeln vor einer Bedienblende an entsprechenden Steuer- und/oder Regelmodulen hinter der Bedienblende, Filtern, Scharnieren an Türen und Gehäusen, Sprüharmen, Behältern usw.. Als Haushaltsgeräte kommeh grundsätzlich alle bekannten Haushaltsgeräte in Frage, insbesondere Gargeräte, Waschmaschinen, Wäschetrocknern, Geschirrspülmaschinen, Kühl-und/oder Gefriergeräte, Staubsauger, Kaffeemaschinen, Küchenmaschinen und Mixer.

### Bezugszeichenliste

- 2: Prägestempel
- 3: Nabenblech
- 4: Nabe
- 4': Stanzloch
- 5: Schaft
- 6: Drehwelle
- 7: Anschlagkörper
- 8: Anschlagfläche
- 9: Körper
- 10: Halterung
- 11: Ausnehmung
- 12: Biegestempel
- 14: Kragen
- 15: Krümmungsbereich
- 16: Übergangsbereich
- 17: Ende
- 18: Verformungsstempel
- 20: Außenwandung
- 21 bis 25: Außenwandungsteilbereich
- 40: Innenwandung
- 41 bis 48: Innenwandungsteilbereich
- 50: Außenwandung
- 51 bis 58: Außenwandungsteilbereich
- 80: Führungsschlitz
- d: Dicke
- W,W': Durchmesser
- T: Tiefe
- A: Nabenachse
- A': Mittelachse

## Patentansprüche

1. Verfahren zum Herstellen einer Nabe (4) zur Aufnahme eines Schaftes (5) oder zum Herstellen eines Schaftes (5) zum Einfügen in eine Nabe (4), bei dem
a) ein Blech (3) mit wenigstens einem Loch (4') bereitgestellt wird,
b) das Blech (3) durch Biegen im Bereich um das Loch (4') zu einem Kragen (14) geformt wird,
c) aus dem Kragen (14) des Blechs (3) die Nabe (4) bzw. der Schaft (5) erzeugt wird, indem ein Schneidewerkzeug mit einer vorgegebenen Anzahl von jeweils im Abstand zu einer Mittelachse des Schneidewerkzeugs in Umfangsrichtung zunehmenden oder abnehmenden Schneidkanten und mit einem im Bereich der Schneidkanten zum Erzeugen der Nabe (4) größeren und zum Erzeugen des Schaftes (5) kleineren Querschnitt als der Kragen (14) im wesentlichen parallel zu seiner Mittelachse durch den Kragen (14) bzw. über den Kragen (14) des Blechs (3) geführt wird.

2. Verfahren zum Herstellen einer Nabe (4) zur Aufnahme eines Schaftes (5) oder zum Herstellen eines Schaftes (5) zum Einfügen in eine Nabe (4), bei dem
a) ein Blech (3) mit wenigstens einem Loch (4') bereitgestellt wird,
b) das Blech (3) durch Biegen im Bereich um das Loch (4') zu einem Kragen (14) geformt wird,
c) aus dem Kragen (14) des Blechs (3) die Nabe (4) bzw. der Schaft (5) erzeugt wird, indem ein Prägewerkzeug (2) mit einer Außenwandung (20) mit einer vorgegebenen Anzahl von jeweils im Abstand zu einer Mittelachse (A) des Prägewerkzeugs (2) in Umfangsrichtung zunehmenden oder abnehmenden Außenwandungsteilbereichen (21 bis 24) und mit einem im Bereich der genannten Außenwandungsteilbereiche größeren Querschnitt als der Kragen im wesentlichen parallel zu seiner Mittelachse (A) in den Kragen (14) des Blechs (3) eingeführt wird.

3. Verfahren zum Herstellen einer Nabe (4) zur Aufnahme eines Schaftes (5) oder zum Herstellen eines Schaftes (5) zum Einfügen in eine Nabe (4), bei dem
a) ein Blech (3) mit wenigstens einem Loch (4') bereitgestellt wird,
b) das Blech (3) durch Biegen im Bereich um das Loch (4') zu einem Kragen (14) geformt wird,
c) aus dem Kragen (14) des Blechs (3) die Nabe (4) bzw. der Schaft (5) erzeugt wird, indem ein Prägewerkzeug mit einer Innenwandung mit einer vorgegebenen Anzahl von jeweils im Abstand zu einer Mittelachse des Prägewerkzeugs in Umfangsrichtung zunehmenden oder abnehmenden Innenwandungsteilbereichen und mit einem im Bereich der genannten Innenwandungsteilbereiche kleineren Querschnitt als der Kragen im wesentlichen parallel zu seiner Mittelachse über den Kragen des Blechs geführt wird.

4. Verfahren nach einem der Ansprüche 1 bis 3, bei dem beim Biegen des Blechs (3) zum Erzeugen des Kragens (14) ein sich entlang einer Mittelachse (A') zu einem. vorderen Ende (17) hin verjüngender und am vorderen Ende (17) einen kleineren Querschnitt als das Loch (4') aufweisender Biegestempel (12) im wesentlichen parallel zu seiner Mittelachse (A') einen vorbestimmten Weg durch das Loch (4') im Blech (3) geführt wird.

5. Verfahren nach einem der vorhergehenden Ansprüche, bei dem ein Blech (3) mit einer zumindest im Bereich der Nabe (4) bzw. des Schaftes, vorzugsweise wenigstens annähernd gleichmäßigen, Dicke von höchstens 5 mm, vorzugsweise höchstens 1 mm, verwendet wird.

6. Verfahren nach einem der vorhergehenden Ansprüche, bei dem ein Blech (3) aus Metall, insbesondere aus einem Stahl, Aluminium oder einer Aluminiumlegierung, verwendet wird.

7. Verfahren nach einem der vorhergehenden Ansprüche, bei dem das Blech (3) mit wenigstens einer zur Nabe ortfesten Anschlagsfläche (8) oder wenigstens einem Anschlagskörper für einen bzw. eine zu dem von der Nabe aufzunehmenden Schaft (5) ortsfest verbundenen Anschlagskörper (7) bzw. Anschlagsfläche versehen wird.

## Claims

1. Method of manufacturing a hub (4) for receiving a shaft (5) or of manufacturing a shaft (5) for insertion into a hub (4), wherein
a) a plate (3) having at least one aperture (4') is prepared,
b) the plate (3) is formed into a collar (14) by bending in the region around the aperture (4'),
c) from the collar (14) of the plate (3) the hub (4) or shaft (5) is produced, in that a cutting tool, with a specified number of cutting edges increasing or decreasing in distance from a central axis of the cutting tool in the circumferential direction and with a cross-section which is larger than the collar (14) in the region of the cutting edges in order to produce the hub (4) and smaller than the collar in order to produce the shaft (5), is passed through the collar (14) or via the collar (14) of the plate (3) in a manner substantially parallel to its central axis.

2. Method of manufacturing a hub (4) for receiving a shaft (5) or of manufacturing a shaft (5) for insertion into a hub (4), wherein
a) a plate (3) having at least one aperture (4') is prepared,
b) the plate (3) is formed into a collar (14) by bending in the region around the aperture (4'),
c) from the collar (14) of the plate (3) the hub (4) or shaft (5) is produced, in that an embossing tool (2), with an outer wall (20) having a specified number of outer wall regions (21 to 24) increasing or decreasing in distance from a central axis (A) of the embossing tool (2) in the circumferential direction and with a larger cross-section than the collar in the region of the cited outer wall regions is inserted into the collar (14) of the plate (3) in a manner substantially parallel to its central axis.

3. Method of manufacturing a hub (4) for receiving receiving a shaft (5) or of manufacturing a shaft (5) for insertion into a hub (4), wherein
a) a plate (3) having at least one aperture (4') is prepared,
b) the plate (3) is formed into a collar (14) by bending in the region around the aperture (4'),
c) from the collar (14) of the plate (3) the hub (4) or shaft (5) is produced, in that an embossing tool (2), with an inner wall (20) having a specified number of inner wall regions increasing or decreasing in distance from a central axis of the embossing tool in the circumferential direction and with a smaller cross-section than the collar in the region of the cited inner wall regions is guided substantially parallel to its central axis via the collar of the plate.

4. Method according to one of claims 1 to 3, wherein upon bending of the plate (3) in order to produce the collar (14) a bending punch (12) tapering along a central axis (A') towards a front end (17) and having a smaller cross-section than the aperture (4') at the frond end (17) is guided substantially parallel to its central axis (A') a specified distance through the aperture (4') in the plate (3).

5. Method according to one of the preceding claims, wherein a plate (3) with a thickness which is preferably at least approximately even at least in the region of the hub (4) or shaft and which is at most 5 mm, preferably at most 1 mm, is used.

6. Method according to one of the preceding claims, wherein a metal plate (3), in particular a steel, aluminium or aluminium alloy plate, is used.

7. Method according to one of the preceding claims, wherein the plate (3) is provided with at least one stop face (8) fixed to the hub or at least one stop body for a stop body (7) or stop face connected rigidly to the shaft (5) to be received by the hub.

## Revendications

1. Procédé pour fabriquer un moyeu (4) pour le logement d'une tige (5) ou pour fabriquer une tige (5) pour l'insertion dans un moyeu (4), avec lequel
a) une tôle (3) avec au moins un trou (4') est mise à disposition,
b) la tôle (3) est formée par pliage dans la zone autour du trou (4') pour avoir une collerette (14),
c) le moyeu (4) et la tige (5) sont fabriqués à partir de la collerette (14) de la tôle (3) par le fait qu'un outil de coupe présentant un nombre prédéfini d'arêtes de coupe augmentant ou diminuant dans le sens périphérique respectivement à distance d'un axe médian de l'outil de coupe et avec une section supérieure à la collerette (14) dans la zone des arêtes de coupe pour générer le moyeu (4) et avec une section inférieure à la collerette (14) pour générer la tige (5) est guidé de façon sensiblement parallèle à son axe médian par la collerette (14) et par la collerette (14) de la tôle (3).

2. Procédé pour fabriquer un moyeu (4) pour le logement d'une tige (5) ou pour fabriquer une tige (5) pour l'insertion dans un moyeu (4), avec lequel
a) une tôle (3) avec au moins un trou (4') est mise à disposition,
b) la tôle (3) est formée par pliage dans la zone autour du trou (4') pour avoir une collerette (14),
c) le moyeu (4) et la tige (5) sont générés à partir de la collerette (14) de la tôle (3) par le fait qu'un outil d'estampage (2) pourvu d'une paroi extérieure (20) avec un nombre prédéfini de zones partielles de paroi extérieure (21 à 24) augmentant ou diminuant dans le sens périphérique, respectivement à distance d'un axe médian (A) de l'outil d'estampage (2) et avec une section supérieure à la collerette dans le secteur des zones partielles citées de paroi extérieure est introduit sensiblement parallèlement à son axe médian (A) dans la collerette (14) de la tôle (3).

3. Procédé pour fabriquer un moyeu (4) pour le logement d'une tige (5) ou pour fabriquer une tige (5) pour l'insertion dans un moyeu (4), avec lequel
a) une tôle (3) avec au moins un trou (4') est mise à disposition,
b) la tôle (3) est formée par pliage dans la zone autour du trou (4') pour avoir une collerette (14),
c) le moyeu (4) et la tige (5) sont générée à partir de la collerette (14) de la tôle (3) par le fait qu'un outil d'estampage pourvu d'une paroi intérieure avec un nombre prédéfini de zones partielles de paroi intérieure augmentant ou diminuant dans le sens périphérique respectivement à distance d'un axe médian de l'outil d'estampage et avec une section inférieure à la collerette dans le secteur des zones partielles citées de paroi intérieure est guidé sensiblement parallèlement à son axe médian au moyen de la collerette de la tôle.

4. Procédé selon l'une quelconque des revendications 1 à 3, avec lequel, pour le pliage de la tôle (3) pour générer la collerette (14), un poinçon de formage (12) qui se rétrécit le long d'un axe médian (A') en direction d'une extrémité (17) avant et présente sur l'extrémité (17) avant une section inférieure au trou (4') est guidé sensiblement parallèlement à son axe médian (A') sur un trajet prédéfini à travers le trou (4') dans la tôle (3).

5. Procédé selon l'une quelconque des revendications précédentes, avec lequel on utilise une tôle (3) avec une épaisseur d'au plus 5 mm, de préférence au plus 1 mm, au moins approximativement uniforme, tout du moins dans la zone du moyeu (4) ou de la tige.

6. Procédé selon l'une quelconque des revendications précédentes, avec lequel on utilise une tôle (3) à base de métal, en particulier à base d'un acier, d'aluminium ou d'un alliage d'aluminium.

7. Procédé selon l'une quelconque des revendications précédentes, avec lequel la tôle (3) est pourvue d'au moins une surface de butée (8) fixe par rapport au moyeu ou d'au moins un corps de butée pour un corps de butée (7) et une surface de butée reliés de façon fixe à la tige (5) à recevoir par le moyeu.
